# EUROPEAN PATENT APPLICATION

(11) **EP 4 506 058 A1**
(43) Date of publication of application: **12.02.2025**
(21) Application number: 23781373.8
(22) Date of filing: 30.03.2023
(51) Int. Cl.: B01J 19/00, B01J 4/00

(54) **AROMATIC COMPOUND REACTOR**

(30) Priority: 01.04.2022 KR 20220041141
(71) Applicant: Hanwha Solutions Corporation, Jung-gu Seoul 04541 (KR)
(72) Inventor: LEE, Hye Won, Daejeon 34128 (KR); JANG, Namjin, Daejeon 34128 (KR); LEE, Shinbeom, Daejeon 34128 (KR)
(74) Representative: Berggren Oy
(86) International application number: PCT/KR2023/004228
(87) International publication number: WO 2023/191520

(57) **Abstract**

The present invention relates to an aromatic compound reactor. The aromatic compound reactor of the present invention includes a mixing member therein so that a reactant may be evenly dispersed, thereby enhancing a flow rate of the reactant to improve the mixing degree between substances, increasing the mixing efficiency between reactants, and weakening an unreacted section in a lower portion of the reactor, thereby improving the selectivity of reactants. The aromatic compound reactor may thus improve the productivity and yield of the reactant.

## Description

### [Technical Field]

The present invention relates to a device for improving the reactivity of an aromatic compound, and more particularly, to an aromatic compound reactor capable of increasing the mixing efficiency of reactants and improving the selectivity of reactants.

### [Background Art]

Toluene, a type of aromatic compound, may have a chlorination reaction through a reaction with chlorine to be manufactured into o-chlorotoluene and p-chlorotoluene.

In a reactor in which the chlorination reaction takes place, gaseous chlorine is injected through a sparger disposed inside the reactor, and a portion of a reaction solution including toluene is injected through a nozzle at the bottom of the reactor to cause a reaction.

The reactor having such a structure has a problem in that a channeling phenomenon occurs while the reaction solution including toluene, an aromatic compound, reacts with chlorine, or the mixing degree between substances deteriorates significantly, thereby lowering the efficiency of the reaction.

In the Korean Application Publication No. 10-1196278 ("Gas distributor for reactor", November 6, 2011, hereinafter referred to as the "related art document"), a supply pipe facility for supplying a reactant from the bottom of a reactor to a sparger of a reactor sparger system through a distribution system disposed on the sparger was disclosed. In addition, a device was configured to spray a liquid through a spray nozzle on the outside of the reactor. However, such a reactor has a problem in that the mixing efficiency is reduced due to the poor mixing degree during the process of mixing the reactant and gas.

### [Disclosure]

### [Technical Problem]

An object of the present invention is to provide an aromatic compound reactor including a mixing member mounted therein so that a reactant may be evenly distributed, rather than supplying the reactant through a nozzle at the bottom of the aromatic compound reactor of the related art.

### [Technical Solution]

In one general aspect, an aromatic compound reactor includes: a reactor having a reaction space formed therein; a plurality of reactant distributors disposed to be spaced apart from each other in a lower portion of the reactor and formed as a flow path to supply a reactant to the reaction space through both ends thereof; at least one reaction solution injection portion formed as a through-hole between the plurality of reactant distributor and supplying a reaction solution to the reaction space; and a mixing member provided in the reaction solution injection portion and dispersing the reaction solution in the reaction space using a rotational flow induced therein.

### [Advantageous Effects]

According to the present invention, by configuring the mixing member in the reactor, an average flow rate of the reactant injected into the reactor may be increased, thereby minimizing back mixing of the reactant.

In addition, by configuring the mixing member in the reactor, the flow rate of the reactant may be strengthened, thereby improving the mixing degree between substances and increasing the mixing efficiency between reactants.

In addition, by configuring the mixing member in the reactor, an unreacted section at the bottom of the reactor may be weakened, thereby improving the selectivity of the reactant.

### [BRIEF DESCRIPTION OF THE DRAWINGS]

FIG. 1 is a schematic diagram illustrating a front view and a bottom view of an aromatic compound reactor of the related art.
FIG. 2 is a schematic diagram illustrating a side view and a bottom view of an aromatic compound reactor of the present invention.
FIG. 3 illustrates a shape and structure of a mixing member installed in an aromatic compound reactor according to Example 2 of the present invention.
FIG. 4 is a table illustrating the effect of dispersing a flow direction and increasing a linear velocity of toluene introduced from the bottom of the reactor by installing a mixing member of the present invention and the effect of improving the catalyst mixing degree accordingly.
FIG. 5 is a table illustrating a simulation of an unreacted section at the bottom of the reactor of the present invention.
FIG. 6(a) is a graph illustrating the uniformity of a catalyst (FeCl₃) of the present invention.
FIG. 6(b) is a graph illustrating a standard deviation of the catalyst (FeCl₃) of the present invention.
FIG. 7 is a table illustrating the simulation of a catalyst deposition phenomenon of the present invention.

### [Best Mode]

In order to achieve the purpose, an aromatic compound reactor of the present invention includes a reactor 100 having a reaction space formed therein; a plurality of reactant distributors 200 disposed to be spaced apart from each other in a lower portion of the reactor 100 and formed as a flow path to supply a reactant to the reaction space through both ends thereof; at least one reaction solution injection portion 300 formed as a through-hole between the plurality of reactant distributors 200 and supplying a reaction solution to the reaction space; and a mixing member 400 provided in the reaction solution injection portion 300 and dispersing the reaction solution in the reaction space using a rotational flow induced therein.

In addition, in the aromatic compound reactor, the reaction solution supplied to the reaction solution injection portion and the reactant of the reactant distributor may be dispersed by the mixing member.

In addition, the reactant supplied to the reactant distributor 200 may be a gas or a liquid.

In addition, the mixing member 400 may be formed such that a distance from a lower bottom surface of the reactor 100 to a lower bottom surface of the mixing member 400 is within a range of 0.008 to 0.02h when a height of the reactor 100 is h.

In addition, the reactant distributor 200 may be formed such that a distance from an upper portion of the mixing member 400 to the center of the reactant distributor 200 is within a range of 0.1 to 0.4h when the height of the reactor 100 is h.

In addition, the mixing member 400 may include: a hub 410 coupled to the center of the mixing member 400; a fan 420 including a plurality of blades 421 formed on an outer circumferential surface of the hub 410; a circumferential portion 430 surrounding an outer circumferential portion 430 of the fan 420; and an impact portion 440 formed at the center of the circumferential portion 430 and with which the injected reaction solution collides.

In addition, the blade 421 may be configured so that a reaction solution injected from the reaction solution injection portion 300 and colliding with the impact portion 440 may be dispersed in the reaction space by a rotational flow by the blade 421.

In addition, a thickness of the blade 421 may be 0.6 to 1.0t when a thickness of the mixing member 400 is t.

In addition, the reaction solution injection portion 300 may be connected to an external reaction solution supply portion in the form of a nozzle.

In addition, the plurality of reactant distributors 200 may be connected to an external reactant liquid supply portion.

### [Mode for invention]

The present invention relates to an aromatic compound reactor, and the present invention will be described in detail through the accompanying drawings and examples and comparative examples.

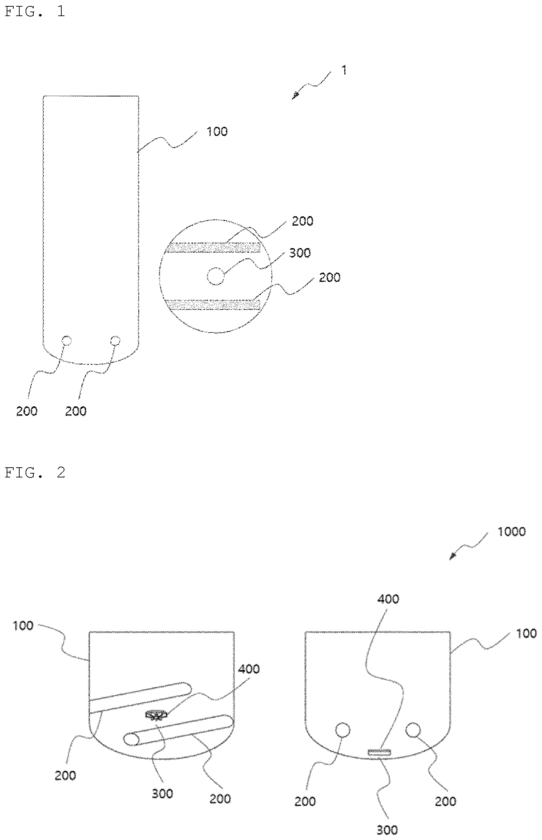

FIG. 1 is a schematic diagram 1 illustrating a front view and a bottom view of the aromatic compound reactor of the related art.

As shown in FIG. 1, in the aromatic compound reactor of the related art, a portion of a reaction solution including an aromatic compound was injected through a nozzle at the bottom of the reactor. However, there was a problem that the reaction solution was not mixed with a reaction gas and exhibited a channeling phenomenon, which significantly worsened the mixing degree between materials.

Therefore, in the present invention, as shown in FIG. 2, a mixing member 400 is configured above a nozzle at the bottom of the reactor 100, and through optimization design, the mixing member 400 is configured to reduce the channeling phenomenon inside the reactor 100 and increase an average flow rate to minimize back mixing in the reactor 100.

FIG. 2 is a schematic diagram 1000 illustrating a side view and a bottom view of an aromatic compound reactor of the present invention.

The reactor 100 may have a reaction space formed therein.

In addition, a plurality of reactant distributors 200 may be formed to be spaced apart from each other in a lower portion of the reactor 100 and formed in a flow path shape so that reactants may be supplied to the reaction space through both ends.

Here, the plurality of reactant distributors 200 may be connected to an external reactant supply unit.

In addition, here, when the height of the reactor 100 is h, the reactant distributor 200 may be formed such that the distance from the top of the mixing member 400 to the center of the reactant distributor 200 is within a range of 0.1 to 0.4 h.

In addition, at least one reaction solution injection portion 300 may be disposed between the plurality of the reactant distributors 200 and may supply a reaction solution to the reaction space.

Here, the reaction solution injection portion 300 may be connected to an external reaction solution supply unit in the form of a nozzle.

In addition, the mixing member 400 may be provided in the reaction solution injection portion 300, and the reaction solution may be dispersed in the reaction space by using a rotational flow formed by the blade 421 provided in the mixing member 400.

Therefore, the aromatic compound reactor 100 having such a structure has the effect that the reaction solution supplied to the reaction solution injection portion 300 and the reactant of the reactant distributor 200 may be dispersed in the reaction space by the rotational flow by the blade 421 provided in the mixing member 400.

In addition, the reaction solution supplied to the reaction solution injection portion 300 and the reactant of the reactant distributor 200 may be dispersed by the mixing member 400, so that the reaction solution may be dispersed.

At this time, the reactant supplied to the reactant distributor 200 may be supplied in the form of a gas or a liquid.

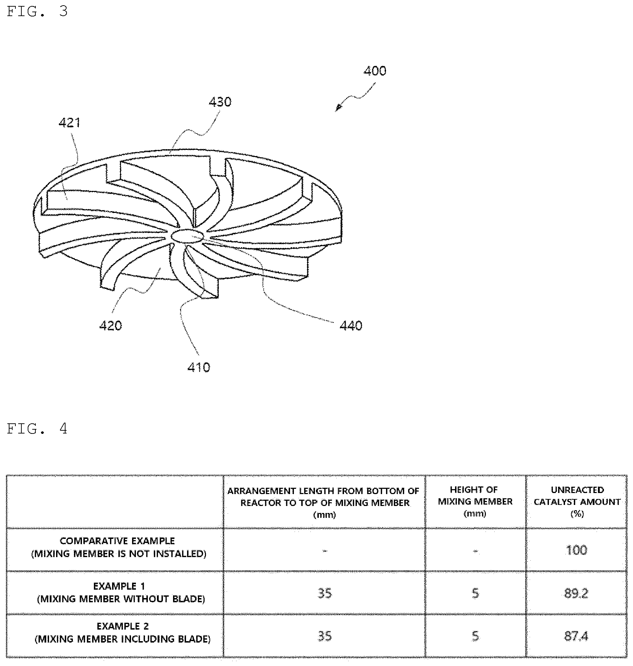

FIG. 3 illustrates a shape and structure of the mixing member installed in the aromatic compound reactor according to Example 2 of the present invention.

The hub 410 may be coupled to the center of the mixing member 400.

The fan 420 may include a plurality of blades 421 formed on the outer circumferential surface of the hub.

In addition, an outer side of the fan 420 may be surrounded by the circumferential portion 430.

The impact portion 440 is formed at the center of the circumferential portion 430, so that the injected reaction solution may collide therewith, thereby dispersing the reactant.

In addition, the blade 421 may be disposed toward the bottom of the reaction solution injection portion 300. Therefore, the reaction solution injected from the reaction solution injection portion 300 may collide with the impact portion 440 to be dispersed by the rotational flow by the blade 421.

In addition, here, the thickness of the blade 421 may be 0.6 to 1.0t when the thickness of the mixing member is t.

In addition, here, the mixing member may be formed such that the distance from the lower bottom surface of the reactor 100 to the lower bottom surface of the mixing member 400 is within a range of 0.008 to 0.02h when the height of the reactor is h.

FIG. 4 is a table illustrating the effect of dispersing a flow direction and increasing a linear velocity of toluene introduced from the bottom of the reactor by installing the mixing member 400 of the present invention and the effect of improving the catalyst mixing degree accordingly.

As shown in FIG. 4, the results of the unreacted catalyst amount according to the arrangement length from the bottom of the reactor to the top of the mixing member 400 and the height of the mixing member 400 of a comparative example and experimental examples are shown.

### (Comparative example)

The reaction solution was injected through the nozzle of the reaction solution injection portion 300.

### (Example 1)

The reaction solution was injected by mounting the mixing member 400 without the blade 421 at an upper portion thereof on the reaction solution injection portion 300.

In addition, the arrangement distance from the bottom of the reactor to the top of the mixing member 400 was 35 mm, and the height of the mixing member 400 was 5 mm.

### (Example 2)

The reaction solution was injected by mounting the mixing member 400 with the blade 421 formed on the outer circumferential surface of the hub 410 on the reaction solution injection portion 300.

In addition, the arrangement distance from the bottom of the reactor to the top of the mixing member 400 was 35 mm, and the height of the mixing member 400 was 5 mm.

As shown in FIG. 4, it can be seen that Comparative Example 1 had 100% of unreacted catalyst, indicating that no reaction occurred at all, Example 1 had 89.2%, and Example 2 had 87.4%, indicating that the unreacted catalyst amount of Example 2 was significantly reduced compared to Comparative Example 1 and Example 1.

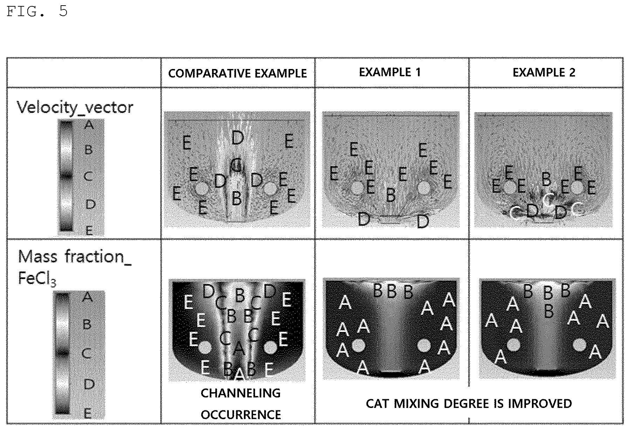

FIG. 5 is a table illustrating a simulation of an unreacted section at the bottom of the reactor of the present invention, illustrating a simulation of the unreacted section at the bottom of the reactor through a flow analysis (CFD) .

In the simulation of the unreacted section at the bottom of the reactor of FIG. 5, the mixing member 400 including a plurality of blades 421 may be included, and the arrangement distance from the bottom of the reactor to the top of the mixing member 400 was 35 mm, and the height of the mixing member 400 was 5 mm.

In general, an experiment of a reaction of aromatic compounds is conducted in two phases of toluene and chlorine gas, but in the present invention, a flow analysis was conducted through simulation by changing to one phase for detailed simulation of the lower portion of the reactor.

The flow model used in the analysis used the mixing member 400 including nine blades 421, and a section in which the actual chlorination reaction occurs is expected to be a section of 30 to 70 cm above the reactant distributor 200, so in the simulation of the present invention, the section up to 30 cm from the tangent of the reactor was set as the analysis section.

In the analysis model of the lower portion of the reactor, a form in which toluene and the catalyst iron chloride (FeCl₃) were introduced from the nozzle of the reaction solution injection portion 300 and were mixed and settled at the bottom of the lower portion of the reactor was simulated.

In reality, iron chloride (FeCl₃) is dissolved in toluene and does not precipitate in a solid state, but in order to identify the unreacted section in the flow analysis, a flow analysis was conducted by performing a simulation based on the assumption that iron chloride (FeCl₃) precipitates in a solid state.

As shown in the comparative example of FIG. 5, it can be seen that a channeling phenomenon was confirmed in the existing reactor.

In order to improve this channeling phenomenon, the structure of the mixing member 400 was designed so that the flow in the lower portion of the reactor can be dispersed, and in order to additionally conduct a detailed simulation therefor, the mixing member 400 that does not include the blade 421 and the mixing member 400 that includes a plurality of blades 421 were designed and an example was conducted.

As shown in Examples 1 and 2 of FIG. 5, it can be seen that the channeling phenomenon was completely resolved when compared to the existing reactor regardless of the shape of the mixing member 400. This phenomenon may be determined to be due to the influence of the dispersion effect of the flow in the lower portion of the reactor according to a result of the velocity vector analysis.

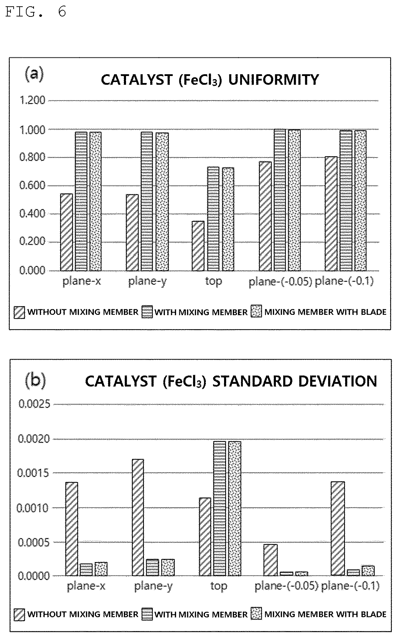

In addition, FIG. 6(a) is a graph illustrating the uniformity of a catalyst (FeCl₃) of the present invention, and FIG. 6(b) is a graph illustrating a standard deviation of the catalyst (FeCl₃) of the present invention. As shown in FIG. 6(a) and FIG. 6(b), when the uniformity of distribution of iron chloride (FeCl₃) was compared by designating five planes in a height direction of the reactor, it was confirmed that the uniformity of catalyst dispersion was also improved by 20% or more.

In addition, depending on the shape of the mixing member 400, in the case of the mixing member 400 not including the blade 421, a differential pressure of the fluid increased by 32% compared to the existing reactor, and in the case of the mixing member 400 including a plurality of or more blades 421, the differential pressure of the fluid increased by 8%. Reflecting these results, the mixing member 400 including a plurality of or more blades 421 was confirmed as an improvement plan and additional simulation was conducted.

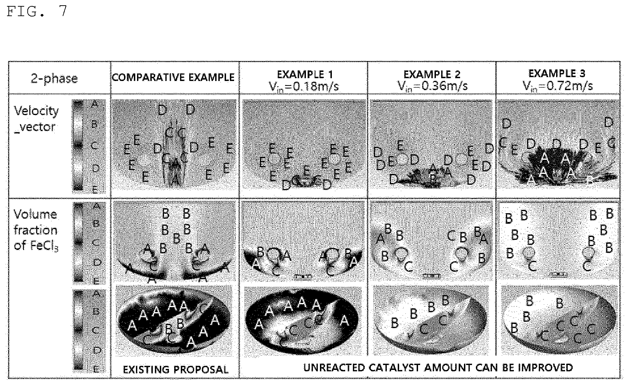

FIG. 7 is a table illustrating a simulation of the catalyst deposition phenomenon of the present invention, illustrating a simulation of the catalyst deposition phenomenon at the bottom of the reactor through a flow analysis (CFD).

In order to examine the dispersion of the catalyst and the possibility of local stagnation of the catalyst that does not participate in the actual reaction locally in the reactor, the catalyst was set as particles with a certain diameter and the simulation was performed using a two-phase analysis. Here, the catalyst is dissolved in the actual reaction and is in one phase, but it was configured as two phases for performing the simulation and analysis.

Since the actual amount of catalyst injected into the reactor is 300 ppm, a volume fraction of the initial condition was assumed to be 0.0001, and the diameter of iron chloride (FeCl₃) was set to approximately 50 µm.

In addition, the flow rate conditions of an inlet reactant were changed to check a deposition pattern according to the change in the flow rate conditions.

Referring to the comparative example of FIG. 7, the mixing member 400 that does not include the blade 421 was simulated such that the introduced iron chloride (FeCl₃) catalyst flows upward in a strong flow formed along the flow of toluene toward the center of the reactor, is then transferred from the upper portion of the reactor to a wall side flow, and is mostly deposited at the bottom of the reactor and the upper portion of the reactant distributor.

Referring to Examples 1 to 3 of FIG. 7, the improvement through the configuration of the mixing member 400 that includes a plurality of blades 421 was simulated such that the iron chloride (FeCl₃) catalyst formed an even flow with toluene inside the reactor without a deposited form due to the dispersion effect of the flow at the bottom of the reactor, and thus, it can be seen that the amount of unreacted catalyst was improved.

Therefore, by installing the mixing member inside the aromatic compound reactor so that the reactant is evenly distributed in the aromatic compound reactor of the present invention, there is an effect of increasing the catalyst circulation flow rate at the bottom of the reactor.

In addition, by installing the mixing member inside the aromatic compound reactor so that the reactant is evenly dispersed in the aromatic compound reactor of the present invention, there is an effect of reducing the amount of catalyst deposition added to the reactant.

### [Industrial Applicability]

The aromatic compound reactor of the present invention provides a technology that may increase the mixing efficiency of the reactant, increase the selectivity of the reactants, and reduce the amount of catalyst deposition added to the reactant by installing the mixing member inside the aromatic compound reactor so that the reactant may be evenly dispersed, thereby improving the productivity and yield of the reactant.

## Claims

1. An aromatic compound reactor comprising:
a reactor having a reaction space formed therein;
a plurality of reactant distributors disposed to be spaced apart from each other in a lower portion of the reactor and formed as a flow path to supply a reactant to the reaction space through both ends thereof;
at least one reaction solution injection portion formed as a through-hole between the plurality of reactant distributors and supplying a reaction solution to the reaction space; and
a mixing member provided in the reaction solution injection portion and dispersing the reaction solution in the reaction space using a rotational flow induced therein.

2. The aromatic compound reactor of claim 1, wherein the reaction solution supplied to the reaction solution injection portion and the reactant of the reactant distributor are dispersed by the mixing member.

3. The aromatic compound reactor of claim 2, wherein the reactant supplied to the reactant distributor is a gas or a liquid.

4. The aromatic compound reactor of claim 1, wherein the mixing member is formed such that a distance from a lower bottom surface of the reactor to a lower bottom surface of the mixing member is within a range of 0.008 to 0.02h when a height of the reactor is h.

5. The aromatic compound reactor of claim 1, wherein the reactant distributor is formed such that a distance from an upper portion of the mixing member to the center of the reactant distributor is within a range of 0.1 to 0.4h when the height of the reactor is h.

6. The aromatic compound reactor of claim 1, wherein
the mixing member includes:
a hub coupled to a rotational axis of the mixing member;
a fan including a plurality of blades formed on an outer circumferential surface of the hub;
a circumferential portion surrounding an outer circumferential portion of the fan; and
an impact portion formed at the center of the circumferential portion and with which the injected reaction solution collides.

7. The aromatic compound reactor of claim 6, wherein the blade is configured so that a reaction solution injected from the reaction solution injection portion and colliding with the impact portion may be dispersed in the reaction space by a rotational flow by the blade.

8. The aromatic compound reactor of claim 7, wherein a thickness of the blade is 0.6 to 1.0t when a thickness of the mixing member is t.

9. The aromatic compound reactor of claim 2, wherein the reaction solution injection portion is connected to an external reaction solution supply portion in the form of a nozzle.

10. The aromatic compound reactor of claim 2, wherein the plurality of reactant distributors are connected to the external reaction solution supply portion.
